# EUROPEAN PATENT APPLICATION

(11) **EP 0 547 739 A1**
(43) Date of publication of application: **23.06.1993**
(21) Application number: 92307722.6
(22) Date of filing: 25.08.1992
(51) Int. Cl.: F16L 59/14, B21C 37/06, B21D 39/04, B32B 15/04, B32B 1/08, F01N 7/14, B29C 63/18

(54) **Method of forming an insulating tube**

(30) Priority: 10.10.1991 GB 9121551
(71) Applicant: MICROPORE INTERNATIONAL LIMITED, Droitwich Worcestershire WR9 7DJ (GB)
(72) Inventor: Hughes, John Thomas, Stanford Bridge, Worcestershire WR9 6SU (GB)
(74) Representative: Jackson, Derek Charles

(57) **Abstract**

An insulating tube is made by drawing a composite tube (16) comprising an inner tube (10) and an outer tube (14) defining an annular space therebetween, the annular space containing a compressible compacted particulate microporous insulation material (12), the outer tube (14) being made of a ductile material. The composite tube (16) is drawn through one or more dies (18) so as to reduce the diameter of the outer tube (14) to a predetermined diameter while the diameter of the inner tube (10) remains substantially constant and so as to further compress and compact the particulate microporous insulation material (12) and maintain it under compressive stress. Thereafter the ends of the composite tube (16) are trimmed.

The inner tube (10) can be open at the ends thereof as the composite tube (16) is drawn through the one or more dies (18).

## Description

The present invention relates to a method of forming an insulating tube, and more particularly is concerned with a method of forming an insulating tube which can be bent into a curve or other shape.

It is often necessary or desirable to apply thermal insulation material to small diameter tubes, having diameters up to about 75 mm for example. Such tubes may be found in many industries, for example in the aircraft industry around jet engines, in heat processing industries especially for instrumentation, in the automobile industry for exhaust systems and in military vehicles.

The environment for the thermal insulation material is often hostile, with water, fuels and other liquids likely to leak and spray the insulated tube. Such tubes often follow tortuous paths and there can be very limited space for insulation, so that thin layers of high performance thermal insulation material are required.

A known form of high performance thermal insulating material comprises compacted microporous silica particles, and typically includes ceramic fibre reinforcement and rutile powder opacifier. Such an insulating material is described, for example, in GB-A-1 350 661.

The term 'microporous' is used herein to identify porous or cellular materials in which the ultimate size of the cells or voids is less than the mean free path of an air molecule at NTP, i.e. of the order of 100 nm or smaller. A material which is microporous in this sense will exhibit very low transfer of heat by air conduction (that is collisions between air molecules). Such microporous materials include aerogel, which is a gel in which the liquid phase has been replaced by a gaseous phase in such a way as to avoid the shrinkage which would occur if the gel were dried directly from a liquid. A substantially identical structure can be obtained by controlled precipitation from solution, the temperature and pH being controlled during precipitation to obtain an open lattice precipitate. Other equivalent open lattice structures include pyrogenic (fumed) and electro-thermal types in which the average ultimate particle size is less than 100 nm. Any of these materials, based for example on silica, alumina or other metal oxides, may be used to prepare a composition which is microporous as defined above.

Compacted microporous thermal insulation materials are essentially rigid materials. Flexibility can be induced by segmenting insulation strips or sewing thin layers of insulation into glass cloth covers in the manner of quilts. These flexible forms can then be applied to pipes and an external protective cover assembled on the insulation to form an insulating tube. The external protective cover may be an adhesive tape or metal sheet, for example. The steps involved in providing such insulation are labour intensive and costly, and when the cover is sheet metal this must be accurately pre-shaped at additional cost. Moreover, there can be small gaps in the insulation material, leading to thermal leakage and "hot spots" on the external surface of the insulating tube. Such an insulating tube cannot, of course, be formed into a different shape without damaging the insulation material and possibly the pipe.

There is therefore a demand for a more cost effective method of providing an insulating tube.

It is an object of the present invention to provide a method of forming a pre-insulated tube which can be bent to follow a curve or other shape without damaging the insulated tube or destroying the thermal insulating properties of the insulation material.

According to the present invention there is provided a method of forming an insulating tube comprising the steps of:
providing a composite tube comprising an inner tube and an outer tube defining an annular space therebetween, the annular space containing a compressible compacted particulate microporous insulation material, the outer tube being made of a ductile material;
drawing the composite tube through one or more dies so as to reduce the diameter of the outer tube to a predetermined diameter while the diameter of the inner tube remains substantially constant and so as to further compress and compact the particulate microporous insulation material and maintain it under compressive stress; and
trimming the ends of the composite tube.

The inner tube may be open at the ends thereof as the composite tube is drawn through the one or more dies.

The outer tube may be made of metal, such as copper, mild steel, stainless steel or aluminium.

The inner tube may be made of metal or plastics material.

The particulate microporous insulation material may be silica aerogel, fumed silica, precipitated silica or the like.

The particulate microporous insulation material may have an initial density in the range 300 to 350 kgm⁻³ and may be further compacted so as to increase the density by typically 20 to 30 per cent. The particulate microporous insulation material may be further compacted to a density in the range 380 to 450 kgm⁻³.

The composite tube may be formed by mounting a plurality of relatively short tubes of insulation material on the inner tube, the inner tube with the tubes of insulation material thereon being inserted into the outer tube.

Alternatively, the composite tube may be formed by mounting a plurality of relatively short half-shells of insulation material on the inner tube, the inner tube with the half-shells of insulation material thereon being inserted into the outer tube.

As a further alternative, the composite tube may be formed by compacting microporous insulation material around the inner tube in a hydrostatic mould, and inserting the inner tube with the microporous insulation material compacted therearound within the outer tube.

For a better understanding of the present invention and to show more clearly how it may be carried into effect reference will now be made, by way of example, to the accompanying drawings in which:
Figures 1 to 4 illustrate steps involved in one method according to the present invention for forming an insulating tube;
Figure 5 illustrates a step involved in another method according to the present invention for forming an insulating tube; and
Figure 6 is a diagrammatic representation of a vehicle engine having an exhaust system incorporating a catalytic converter and an insulating tube according to the present invention.

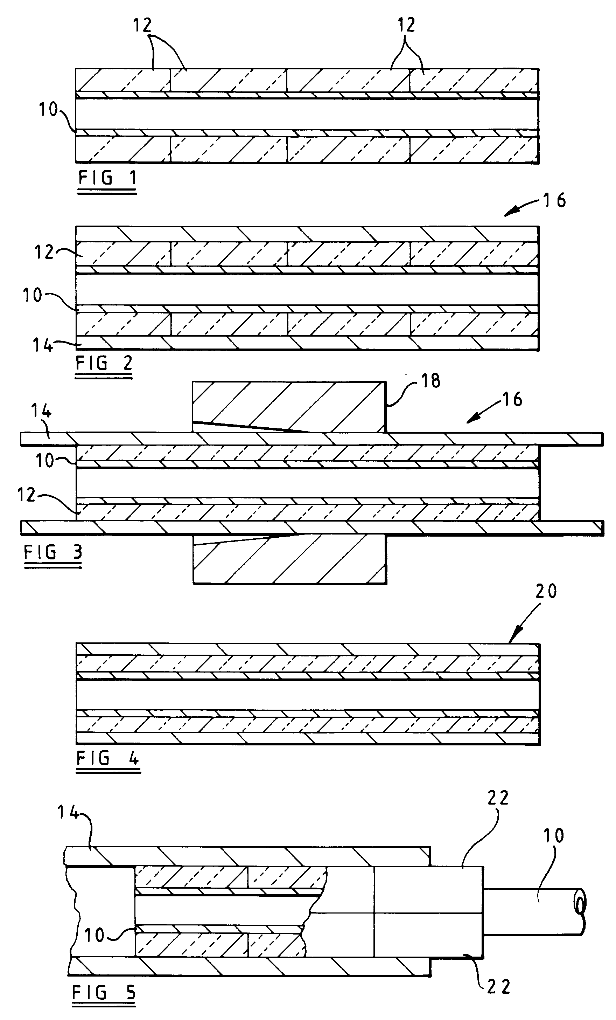

One embodiment of a method according to the present invention for forming an insulating tube is described with reference to Figures 1 to 4. As shown in Figure 1, a tube 10 is provided, the tube having a length from 3 to 10 metres for example. The tube 10 is made of any suitable material for the exhaust gas, fuel or the like that is to pass therethrough and may be made, for example, of steel, copper or plastics material depending on its intended use, plastics materials being preferred where corrosive material at relatively low temperature is to flow within the tube 10. A plurality of relatively short tubes 12 of a compressible particulate thermal insulating material are chosen to be of a size convenient for handling and are mounted around the tube 10 such that the tubes 12 butt closely together, the internal diameter of the tubes 12 being such that they fit closely around the outside of the tube 10.

The thermal insulating material comprises a microporous material in the form of a mixture of highly dispersed pyrogenic silica, alumino-silicate fibre reinforcement and rutile powder opacifier, mixed together in known manner. The mixture is made by mixing the constituents of the insulating material in the following proportions by weight:

| | |
|---|---|
| Pyrogenic silica | 62% |
| Ceramic fibre | 5% |
| Rutile powder | 33% |

The mixture is poured into an annular mould and is compacted with an annular plunger to a density of the order of 300 to 350 kgm⁻³ in known manner to produce each tube 12.

The tube 10 with the plurality of relatively short tubes 12 of thermal insulating material mounted thereon is inserted into an outer tube 14 which has substantially the same length as the inner tube 10. The outer tube 14 is made of a ductile material that can be drawn through a die, for example a metal such as copper, mild steel, stainless steel or aluminium, the metal giving the added advantage of fire protection. However, other materials can also be used, including non-metals if appropriate, according to the application under consideration. The composite insulating tube 16 thus formed is shown in Figure 2.

The composite insulating tube 16 is then drawn through one or more dies, such as die 18, in order to reduce the outer diameter of outer tube 14, as shown in Figure 3. Where only a small reduction in diameter is required, a single die 18 will normally suffice, but where a substantial reduction in diameter is required two or more dies 18 may be employed to obtain a staged reduction in diameter, with the tube 14 being annealed between stages if necessary. Because the outer tube is made of a ductile material, the tube is progressively stretched and reduced in diameter. This also further compresses the insulating material, but surprisingly we have found it does not result in any detectable change in the diameter of the inner tube 10. The significance of this is that it is possible to produce insulating tubes in which the inner tube has a closely controlled diameter. This is of critical importance in many applications, for example where aircraft fuel lines are concerned.

The composite tube 16 is drawn through the die or dies until the outer diameter of the tube 16 has been reduced to the required diameter and the insulation material has been compacted so as to increase the density of the insulation material by some 20 to 30 per cent, that is to density of the order of 380 to 450 kgm⁻³. Compacting the insulation material to this degree helps to eliminate any air pockets in the insulation and to give the insulation a homogenous texture. The inner tube 10 is therefore totally surrounded and supported by compacted insulation material which is maintained under compressive stress so that it will support the walls of the inner tube during subsequent bending.

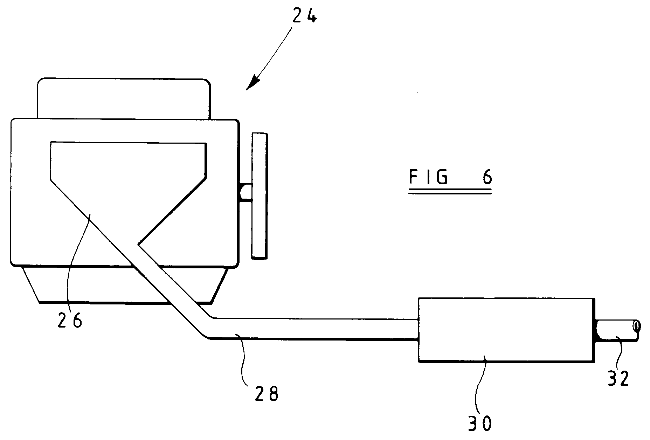

Once the composite tube 16 has been drawn down to the required diameter, the ends of the outer tube 14, which have been stretched as a result of the drawing process, are trimmed to the length of the inner tube 10 to produce an insulating tube 20 as shown in Figure 4. Such an insulating tube can generally be handled and bent in the same manner as a single walled tube having a diameter equivalent to the outer diameter of the tube 20.

Because the inner tube 10 is totally surrounded and supported by compacted microporous insulation material as described above, the tube 10 is supported within the outer tube 14 during bending of the insulating tube 20 and does not need to have the same strength as it would otherwise require to prevent the inner tube 10 rupturing or developing kinks if the inner tube was not supported in this way. It is therefore possible to reduce the thickness of the walls of the inner tube 10 compared with the thickness that would otherwise be required. This has two benefits, one being that it is easier to bend the tube 20 and the other being that the inner tube 10 has a lower thermal capacity than would otherwise be the case. Thermal capacity can be important, for example when a high-temperature fluid such as exhaust gas is flowing through the inner tube 10 less heat is transferred from the hot exhaust to the inner tube and the gas remains at a higher temperature. The supporting of the inner tube 10 by compacted microporous insulation material can also be of advantage where the fluid within the inner tube 10 is liable to solidify. For example, water that freezes is less likely to burst the inner tube 10 when it is supported by compacted microporous insulation material.

An alternative to using tubes 12 of thermal insulation material is to use half-shells 22 which are also pre-formed in a mould in the manner of the tubes 12. Half-shells 22 can be more straightforward to produce than tubes. As shown in Figure 5, the half-shells 22 are arranged in pairs around the tube 10 and are inserted into the tube 14 in stages prior to drawing the composite tube 16 through the die 18 as described above.

As an alternative to pre-forming compacted shapes of insulation material, the insulation mixture can be compacted in a hydrostatic manner around the inner tube 10 by arranging the inner tube 10 and insulation mixture within a hydrostatic mould in the form of a flexible outer tube and introducing a fluid under pressure around the outer tube so as to cause the outer tube to collapse or contract and to compact the insulation mixture around the inner tube 10. Once the insulation mixture has been compacted, the pressure on the fluid is removed and the inner tube with the insulation mixture compacted therearound is withdrawn from the hydrostatic mould and inserted into the outer tube 14 to form the composite tube 16. Some play between the external surface of the compacted microporous insulation mixture and the internal surface of the outer tube 14 is acceptable at this stage because the composite tube is drawn through the die or dies until the outer diameter of the tube 16 has been reduced to the required diameter and the insulation material has been further compacted.

Figure 6 illustrates one application of the tube 20 as described above. Figure 6 shows a vehicle engine 24 which is provided with an exhaust system comprising an exhaust manifold 26, a front pipe 28, a catalytic converter 30 and a rear pipe 32. It is well known that catalytic converters function properly only when the catalyst is at or above a predetermined temperature, usually about 750 °C. This is not a problem once the engine has been running for some time, but the catalyst does not function properly for a short time after the engine is started and this leads to increased emissions of noxious gases which are being increasingly strictly controlled. One method of reducing the warm-up period of the catalyst, and thus of reducing emissions of noxious gases, is to insulate the front pipe 28 in order to increase the temperature of the exhaust gases entering the catalytic converter shortly after the engine has been started. The use of an insulating tube 20 made in accordance with the present invention for the front pipe 28 has two advantages. Firstly, the tube 20 is pre-insulated and can subsequently be formed to the required shape for the front pipe 28, which is often quite complex, without the need to use several labour intensive stages for the production of an insulated front pipe 28. Secondly, the wall thickness of the inner tube 10 can be reduced in comparison with conventional front pipes 28 and this results in a lower thermal capacity for the front pipe 28 and, consequently, a higher temperature for the exhaust gases reaching the catalytic converter 30.

## Claims

1. A method of forming an insulating tube characterised by the steps of:
providing a composite tube (16) comprising an inner tube (10) and an outer tube (14) defining an annular space therebetween, the annular space containing a compressible compacted particulate microporous insulation material (12), the outer tube (14) being made of a ductile material;
drawing the composite tube (16) through one or more dies (18) so as to reduce the diameter of the outer tube (14) to a predetermined diameter while the diameter of the inner tube (10) remains substantially constant and so as to further compress and compact the particulate microporous insulation material (12) and maintain it under compressive stress; and
trimming the ends of the composite tube (16).

2. A method according to claim 1, characterised in that the inner tube (10) is open at the ends thereof as the composite tube (16) is drawn through the one or more dies (18).

3. A method according to claim 1 or 2, characterised in that the outer tube (14) is made of metal, such as copper, mild steel, stainless steel or aluminium.

4. A method according to claim 1, 2 or 3, characterised in that the inner tube (10) is made of metal or plastics material.

5. A method according to any preceding claim, characterised in that the particulate microporous insulation material (12) is silica aerogel, fumed silica, precipitated silica or the like.

6. A method according to any preceding claim, characterised in that the particulate microporous insulation material (12) has an initial density in the range 300 to 350 kgm⁻³.

7. A method according to any preceding claim, characterised in that the particulate microporous insulation material (12) is further compacted so as to increase the density by typically 20 to 30 per cent.

8. A method according to claim 7, characterised in that the particulate microporous insulation material (12) is further compacted to a density in the range 380 to 450 kgm⁻³.

9. A method according to any preceding claim, characterised in that the composite tube (16) is formed by mounting a plurality of relatively short tubes of insulation material (12) on the inner tube (10), the inner tube with the tubes of insulation material thereon being inserted into the outer tube (14).

10. A method according to any one of claims 1 to 8, characterised in that the composite tube (16) is formed by mounting a plurality of relatively short half-shells of insulation material (22) on the inner tube (10), the inner tube with the half-shells of insulation material thereon being inserted into the outer tube (14).

11. A method according to any one of claims 1 to 8, characterised in that the composite tube (16) is formed by compacting microporous insulation material around the inner tube (10) in a hydrostatic mould, and inserting the inner tube with the microporous insulation material compacted therearound within the outer tube (14).
